(19) **Europäisches Patentamt / European Patent Office / Office européen des brevets**

(11) **EP 4 636 372 A1**

(12) **EUROPEAN PATENT APPLICATION**
published in accordance with Art. 153(4) EPC

(43) Date of publication:
22.10.2025 Bulletin 2025/43

(21) Application number: 24738565.1

(22) Date of filing: 05.01.2024

(51) International Patent Classification (IPC):
$G01L\ 1/14^{(2006.01)}$  $G01L\ 9/12^{(2006.01)}$

(52) Cooperative Patent Classification (CPC):
G01L 1/14; G01L 9/12

(86) International application number:
PCT/CN2024/070820

(87) International publication number:
WO 2024/146634 (11.07.2024 Gazette 2024/28)

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
KH MA MD TN

(30) Priority: 05.01.2023 CN 202310013743

(71) Applicant: Huawei Technologies Co., Ltd.
Shenzhen, Guangdong 518129 (CN)

(72) Inventors:
• SHI, Diwen
  Shenzhen, Guangdong 518129 (CN)
• LI, Zhuo
  Shanghai 200433 (CN)
• YANG, Guoqing
  Shanghai 200433 (CN)

(74) Representative: Pfenning, Meinig & Partner mbB
Patent- und Rechtsanwälte
Theresienhöhe 11a
80339 München (DE)

(54) **PRESSURE SENSOR AND ELECTRONIC DEVICE**

(57) A capacitive pressure sensor is provided and includes two electrode layers (11 and 14), a first dielectric layer (13), and a second dielectric layer (12). The two electrode layers (11 and 14) are respectively disposed on two sides of the first dielectric layer (13). The two electrode layers (11 and 14) include conductive materials, and are configured to input a current and output a current. The first dielectric layer (13) includes a flexible polymer (131), a conductive filler (133), and small hollow spheres (132) that have flexible outer walls. The small hollow spheres (132) and the conductive filler (133) are wrapped in the flexible polymer (131), and some small hollow spheres (131) protrude on a surface that is of the first dielectric layer (13) and that faces at least one of the electrode layers (11 and 14). The second dielectric layer (12) is of an insulation material, and is disposed between at least one of the electrode layers (11 and 14) and the first dielectric layer (13). The capacitive pressure sensor can improve sensitivity of the pressure sensor, and has a simple manufacturing process. This facilitates mass production. An electronic device is further provided.

FIG. 1

## Description

This application claims priority to Chinese Patent Application No. 202310013743.1, filed with the China National Intellectual Property Administration on January 5, 2023 and entitled "PRESSURE SENSOR AND ELECTRONIC DEVICE", which is incorporated herein by reference in its entirety.

## TECHNICAL FIELD

This application relates to the field of sensors, and in particular, to a capacitive pressure sensor and an electronic device.

## BACKGROUND

Currently, pressure sensors on the market are mainly made of metal, semiconductors, piezoelectric crystals, and the like. Technologies for manufacturing the pressure sensor by using these materials are very mature, and the pressure sensor has high measurement precision and good stability. However, due to rigidity of the pressure sensor, problems such as difficulty in applying the pressure sensor to a curved surface, inability to withstand large deformation, and impact on wearing comfort exist. These shortcomings hinder application of the pressure sensor in scenarios such as flexible human-machine interaction and a smart wearable device.

At present, research on a flexible pressure sensor is still immature. A measurement range of the flexible pressure sensor is usually small due to a surface deformation principle. When pressure is high, sensitivity of the flexible pressure sensor is reduced. This limits an application scope of the pressure sensor. Therefore, how to design a pressure sensor that has a large pressure measurement range and high sensitivity becomes an urgent problem to be resolved.

## SUMMARY

Embodiments of this application provide a pressure sensor and an electronic device. The pressure sensor has high sensitivity, a wide linear range, and a large pressure measurement range, is flexible and bendable, and is applicable to various special-shaped surfaces such as a curved surface.

In view of this, embodiments of this application provide the following technical solutions.

According to a first aspect, an embodiment of this application first provides a pressure sensor. The pressure sensor includes two electrode layers, a first dielectric layer, and a second dielectric layer. The two electrode layers include conductive materials, so that the electrode layers have an electricity conduction capability. The two electrode layers are respectively disposed on two sides of the first dielectric layer, and are configured to input a current and output a current. The first dielectric layer includes a flexible polymer, a conductive filler, and a plurality of small hollow spheres that have flexible outer walls. The plurality of small hollow spheres and the conductive filler are wrapped in the flexible polymer. The second dielectric layer is of an insulation material, and is disposed between at least one of the electrode layers and the first dielectric layer.

First, the first dielectric layer is used as a main sensitive element. Under an action of pressure, compression of the flexible polymer causes a thickness of the first dielectric layer to decrease, and also causes capacitance to increase. That is, the flexible polymer makes a capacitance correspondence to the pressure, so that the pressure sensor can measure a pressure value.

Second, under the action of pressure, the small hollow spheres are more likely to undergo compression deformation than the flexible polymer, causing volumes of the small hollow spheres to become small, and air is also compressed to some extent, causing a volume proportion of the air in dielectric to become small. Because a dielectric constant of the air is less than that of the flexible polymer, an overall dielectric constant of the first dielectric layer increases. Consequently, the capacitance further increases. A gravity-induced capacitance change mechanism is added on a basis of a conventional capacitive pressure sensor, so that sensitivity of the capacitive sensor can be further improved. In addition, because the small hollow sphere has the outer wall, the small hollow sphere has better mechanical stability and better resilience, and can withstand greater pressure and show a quicker response speed.

Moreover, the conductive filler is added to the first dielectric layer. Under the action of pressure, volume compression of the flexible polymer causes volume compression of the first dielectric layer, which further causes a volume fraction of the conductive filler to increase. When the volume fraction of the conductive filler does not reach a seepage threshold, a dielectric constant of composite dielectric increases as the pressure increases, and the capacitance of the first dielectric layer also increases as the pressure increases, thereby improving sensitivity of the pressure sensor.

Finally, the second dielectric layer is made of the insulation material, which can reduce an electricity leakage phenomenon, can improve sensitivity of the capacitive sensor, and can reduce noise, thereby obtaining better pressure measurement effect.

In a possible implementation, some of the plurality of small hollow spheres protrude on a surface that is of the first dielectric layer and that faces at least one of the electrode layers. That is, the small hollow spheres are not all immersed in the flexible polymer, but protrude on the surface that is of the first dielectric layer and that faces at least one of the electrode layers. As a result, the surface of the first dielectric layer is not flat but uneven, and a microstructure is formed on the surface of the first dielectric layer.

Because the small hollow spheres protrude on the surface that is of the first dielectric layer and that faces at least one of the electrode layers, more air (air outside the small hollow spheres) exists in the first dielectric layer. In addition, under the action of pressure, the protrusive small hollow spheres are more likely to deform than small hollow spheres immersed in the flexible polymer. Under the action of pressure, in one aspect, the thickness of the first dielectric layer decreases, and the capacitance increases. In another aspect, the protrusive small spheres are flattened, and air between the protrusive small spheres is partially discharged outside the first dielectric layer. The aspects both cause a proportion of air in the first dielectric layer to decrease. Because the dielectric constant of the air is less than that of a flexible body, the overall dielectric constant of the first dielectric layer increases. Another gravity-induced capacitance change mechanism is added on the basis of the conventional capacitive pressure sensor, which can further improve sensitivity of the capacitive sensor.

In a possible implementation, a thickness of the second dielectric layer does not exceed 200 nm. Adding the second dielectric layer is equivalent to adding a series capacitor to an original capacitor. To reduce impact of the series capacitor (the second dielectric layer) on total capacitance, capacitance of the series capacitor (capacitance of the second dielectric layer) needs to be large enough. In this case, the capacitance of the second dielectric layer may be increased by reducing the thickness of the second dielectric layer. Therefore, the thickness of the second dielectric layer may be set to be less than or equal to 200 nm, to reduce impact of the second dielectric layer on performance of the pressure sensor.

In a possible implementation, at least one electrode layer (a first electrode layer) of the two electrode layers uses a flexible electrode, and a Young's modulus of the flexible electrode is less than 50 MPa. The flexible electrode is used, and it is ensured that the Young's modulus of the flexible electrode is small. This can make the flexible electrode softer, and enhance adaptability of the pressure sensor to different curved surfaces, so that the flexible electrode can better fit a protrusive shape on the first dielectric layer under the action of pressure, thereby ensuring a stable output of the pressure sensor and reducing time drift effect.

In a possible implementation, at least one electrode layer (the first electrode layer) of the two electrode layers includes a flexible polymer layer and a conductive plating layer. The conductive plating layer is attached to a surface that is of the flexible polymer layer and that faces the first dielectric layer. The flexible polymer and the conductive plating layer jointly form the flexible electrode. A Young's modulus of the flexible polymer is less than 50 MPa. There may be one or more conductive plating layers, and a total thickness is less than 2 micrometers. This can make the flexible electrode softer, and enhance adaptability of the pressure sensor to different curved surfaces, so that the flexible electrode can better fit the protrusive shape on the surface of the first dielectric layer under the action of pressure, thereby ensuring the stable output of the pressure sensor and reducing time drift effect.

In a possible implementation, the flexible polymer layer is of a dense structure or of a porous structure.

In a possible implementation, the some small hollow spheres of the small hollow spheres protrude on a surface that is of the first dielectric layer and that faces the first electrode layer. In this way, the protrusive small hollow spheres can more quickly deform, and the air between the protrusive small spheres can be more quickly discharged, thereby further improving sensitivity of the pressure sensor.

In a possible implementation, at least one electrode layer (a second electrode layer) of the two electrode layers includes a metallic material. The second dielectric layer is attached to a surface that is of the second electrode layer and that faces the first dielectric layer, and the second dielectric layer is an oxide of the metallic material included in the second electrode layer. It should be understood that the second electrode layer and the first electrode layer may be a same electrode layer or may be different electrode layers.

When an electrode layer is made of some special metal, a very thin layer of oxide is naturally formed on a surface of the special metal. The oxide layer may play a role of insulation, that is, the second dielectric layer is naturally formed between the electrode layer and the first dielectric layer. In this case, the second electrode layer does not need to be additionally disposed, and a process is simplified. In addition, a thickness of the naturally formed oxide is very thin. Therefore, impact on performance of the pressure sensor is small, and a volume of the pressure sensor can be further reduced. For example, the special metallic material may be aluminum (Al), titanium (Ti), molybdenum (Mo), magnesium (Mg), stainless steel, or the like.

In a possible implementation, the first dielectric layer is in contact with the second dielectric layer, to better play a function of insulation of the second dielectric layer.

In a possible implementation, the second dielectric layer is disposed between the first dielectric layer and each of the two electrode layers, to better play the role of insulation of the second dielectric layer.

In a possible implementation, the pressure sensor further includes electrode pins that are electrically connected to the two electrode layers and that are configured to output a current in the electrode layer.

According to a second aspect, an embodiment of this application provides an electronic device. The electronic device may be an electronic device such as a mobile phone, a watch, a notebook computer, or a remote control, or may be a wearable device such as a headset, a watch, a band, glasses, or a ring. The electronic device includes a device body and the pressure sensor described in the first aspect.

The second aspect of embodiments of this application can implement the beneficial effects described in the first aspect. To avoid repetition, details are not described herein again.

BRIEF DESCRIPTION OF DRAWINGS

FIG. 1 is a diagram of a structure of a pressure sensor according to an embodiment of this application;
FIG. 2 is a diagram of a structure of a first dielectric layer according to an embodiment of this application;
FIG. 3 is a diagram of a structure change of a pressure sensor under an action of pressure according to an embodiment of this application;
FIG. 4 is a diagram of a capacitance and pressure test curve of a pressure sensor according to an embodiment of this application;
FIG. 5 is a diagram of a sensitivity test curve of a pressure sensor according to an embodiment of this application;
FIG. 6 is a diagram of a time drift test curve of a pressure sensor according to an embodiment of this application; and
FIG. 7 is a diagram of a temperature stability test curve of a pressure sensor according to an embodiment of this application.

Reference numerals:

1: pressure sensor; 11: electrode layer; 12: second dielectric layer; 13: first dielectric layer; 14: electrode layer; 131: flexible polymer; 132: small hollow spheres; and 133: conductive filler.

**DESCRIPTION OF EMBODIMENTS**

The following describes embodiments of the present invention with reference to the accompanying drawings in embodiments of the present invention. The following description shows drawings showing specific aspects of embodiments of the present invention or drawings in which specific aspects of embodiments of the present invention may be used. It should be understood that embodiments of the present invention may be used in other aspects, and may include structural or logical changes not depicted in the accompanying drawings. The following detailed description, therefore, is not to be taken in a limiting sense, and the scope of the present invention is defined by the appended claims. For example, it should be understood that the disclosure with reference to the described method may also be applied to a corresponding device or system for performing the method, and vice versa. For example, if one or more specific method steps are described, a corresponding device may include one or more units such as functional units for performing the described one or more method steps (for example, one unit performs the one or more steps; or a plurality of units, each of which performs one or more of the plurality of steps), even if such one or more units are not explicitly described or illustrated in the accompanying drawings. In addition, for example, if a specific apparatus is described based on one or more units such as a functional unit, a corresponding method may include one step for implementing functionality of one or more units (for example, one step for implementing functionality of one or more units; or a plurality of steps, each of which is for implementing functionality of one or more units in a plurality of units), even if such one or more of steps are not explicitly described or illustrated in the accompanying drawings. Further, it should be understood that features of example embodiments and/or aspects described in this specification may be combined with each other, unless expressly stated otherwise.
In embodiments of the present invention, "at least one" means one or more, and "a plurality of" means two or more. "And/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. "At least one item (piece) of the following" or a similar expression thereof means any combination of these items, including a singular item (piece) or any combination of plural items (pieces). For example, at least one of a, b, or c may indicate: a; b; c; a and b; a and c; b and c; or a, b, and c; where a, b, and c may be singular or plural.
Terms used in embodiments of the present invention are merely intended to explain specific embodiments of the present invention, and are not intended to limit the present invention.
Currently, pressure sensors on the market are mainly made of metal, semiconductors, piezoelectric crystals, and the like. Technologies for manufacturing the pressure sensor by using these materials are very mature, and the pressure sensor has high measurement precision and good stability. However, due to rigidity of the pressure sensor, problems that it is difficult to apply the pressure sensor to a curved surface, the pressure sensor cannot withstand large deformation and affects wearing comfort, and the like exist. These shortcomings hinder application of the pressure sensor in scenarios such as flexible human-machine interaction and a smart wearable device.
At present, research on a flexible pressure sensor is still immature. A measurement range of the flexible pressure sensor is usually small due to a surface deformation principle. When pressure is high, sensitivity of the flexible pressure sensor is reduced. This limits an application scope of the pressure sensor. In terms of a manufacturing process, a micro-nano processing method has good consistency, but a process is complex and costly, while a manufacturing process of a biological template method is simple, but it is difficult to ensure consistency. In addition, it is difficult to manufacture and apply the pressure touch sensor on any curved surface by using the two manufacturing processes.

In view of this, embodiments of this application provide a capacitive pressure sensor and an electronic device. The capacitive pressure sensor advantages of high sensitivity and a wide linear range, being flexible and bendable, and being applicable to various special-shaped surfaces such as a curved surface. In addition, a manufacturing method of the pressure sensor is simple, low-cost, and is easy to be used in mass production.

First, a principle of the capacitive pressure sensor is explained. The capacitive pressure sensor usually uses a circular metal film or a metal-plated film as one electrode of a capacitor, and uses a fixed electrode as another electrode. When the film is deformed due to an action of pressure, capacitance formed between the film and the fixed electrode changes. An electrical signal that is related to the capacitance change may be output by using a measurement circuit, and a pressure value may be obtained by processing the electrical signal.

A formula for calculating the capacitance in the capacitive pressure sensor is as follows:

$$C = (\varepsilon\_0\, \varepsilon\_r\, S)/d$$

C represents the capacitance; $\varepsilon 0$ represents a dielectric constant of vacuum; $\varepsilon r$ represents a dielectric constant of dielectric relative to vacuum; S represents an area of overlap of electrode plates of the capacitor; and d represents a distance between the electrode plates of the capacitor.

For a conventional capacitive pressure sensor, under an action of pressure, the capacitive pressure sensor deforms, and the distance between the two electrode plates of the capacitor decreases. Consequently, the capacitance increases, and an electrical signal is output, to obtain a pressure value. However, in such a design, there is only one gravity-induced capacitance change mechanism, that is, the distance between the two electrode plates of the capacitor. This leads to problems that the pressure sensor has a small measurement range and low sensitivity.

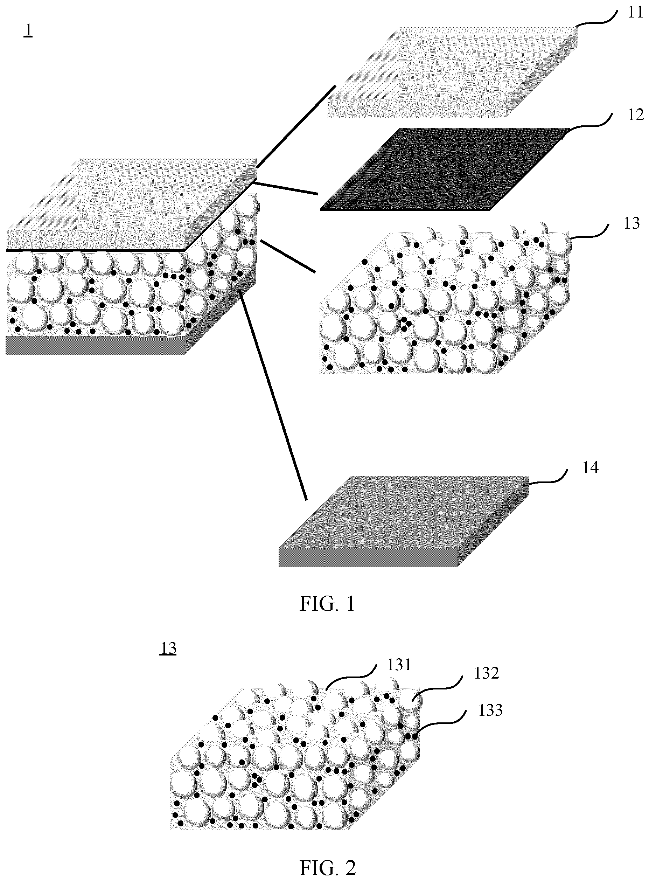

The following describes a capacitive pressure sensor provided in embodiments of this application. Specifically, FIG. 1 is a diagram of a structure of the pressure sensor according to an embodiment of this application. As shown in FIG. 1, the pressure sensor provided in this embodiment of this application includes an electrode layer 11, an electrode layer 14, a first dielectric layer 13, and a second dielectric layer 12.

The electrode layer 11 and the electrode layer 14 include conductive materials, so that the electrode layers have conductive properties. In a possible implementation, the conductive material may be a metal foil or a metal paste layer, for example, may be gold (Au), copper (Cu), platinum (Pt), aluminum (Al), or the like.

In another possible implementation, the conductive material may be a composite conductive material, for example, may be indium tin oxide (ITO).

The electrode layer 11 and the electrode layer 14 are disposed on two sides of the first dielectric layer 13, and are configured to input a current and output a current. Specifically, one of the electrode layers is configured to input a current into the first dielectric layer 13, and the other electrode layer is configured to output a current in the first dielectric layer 13. For example, the electrode layer 11 may be configured to input a current into the first dielectric layer 13, and the electrode layer 14 may be configured to output a current in the first dielectric layer 13. Alternatively, the electrode layer 14 may be configured to input a current into the first dielectric layer 13, and the electrode layer 11 may be configured to output a current in the first dielectric layer 13.

The first dielectric layer 13 is a main flexible element, and makes a capacitance change response to pressure. Specifically, FIG. 2 is a diagram of a structure of the first dielectric layer 13 according to an embodiment of this application. As shown in FIG. 2, the first dielectric layer 13 provided in this embodiment of this application includes a flexible polymer 131, a plurality of small hollow spheres 132, and a conductive filler 133.

The flexible polymer 131 may deform under an action of pressure. For example, silicone rubber (PDMS, Polydimethylsiloxane) may be used as the flexible polymer 131. It should be understood that the silicone rubber is merely an example, and another flexible polymer material is also possible. The material of the flexible polymer 131 is not limited in embodiments of this application.

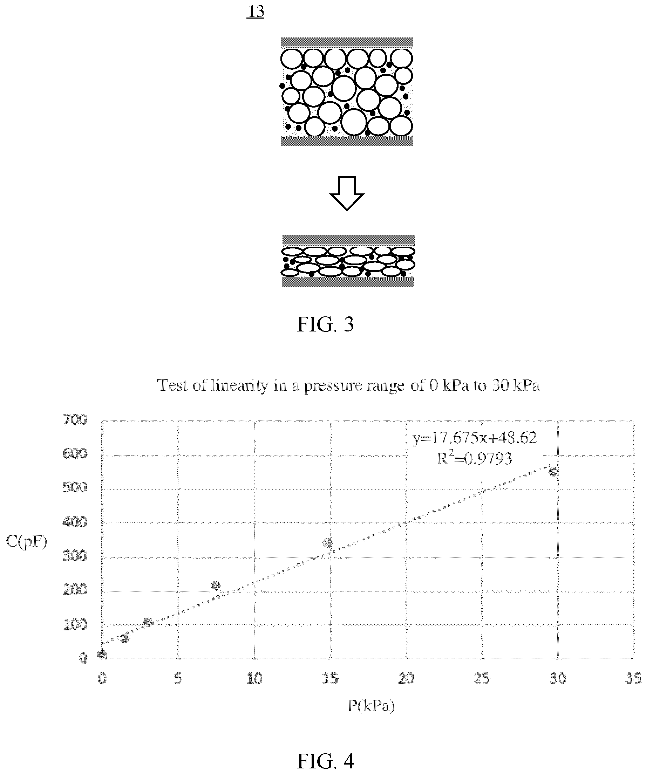

The plurality of small hollow spheres 132 have flexible outer walls, and the flexible outer walls are closed to form the small hollow spheres. As shown in FIG. 3, under the action of pressure, the small hollow spheres are more likely to deform than the silicone rubber under pressure. Volumes of the small hollow spheres decrease, and air is also compressed to some extent, causing a proportion of air to decrease. Because a dielectric constant of the air is less than that of a flexible body, an overall dielectric constant of the first dielectric layer 13 increases. According to the foregoing formula for calculating capacitance, under the action of pressure, the dielectric constant $\varepsilon\_r$, of the first dielectric layer 13, relative to vacuum becomes larger. Consequently, the capacitance further increases. A gravity-induced capacitance change mechanism is added on a basis of a conventional capacitive pressure sensor, which can further improve a measurement range and sensitivity of the capacitive sensor. In addition, because the small hollow spheres have the outer walls and are of a closed hole structure, compared with other opened hole porous structures without outer walls, the small hollow spheres have better mechanical stability and better resilience, and can withstand greater pressure and show a quicker response speed.

For example, the small hollow spheres 132 may be expanded microspheres. The expanded microsphere is a thermoplastic hollow polymer microsphere, and includes a thermoplastic polymer housing and liquid alkane gas sealed in the housing. During heating, gas pressure inside the housing increases and the thermoplastic housing softens, which significantly increases volumes of the expanded microspheres. During cooling, the housing of the expanded microsphere hardens again, and an expanded volume is fixed. It should be understood that the expanded microsphere is merely an example, and another small hollow sphere that can deform under the action of pressure is also possible. A specific implementation of the small hollow sphere 132 is not limited in embodiments of this application.

For example, the small hollow sphere 132 may be in a regular shape such as a spherical shape, an elliptical shape, a rectangle shape, a trapezoid shape, or a diamond shape, or may be in some irregular shapes. Additionally, shapes and sizes of the plurality of small hollow spheres 132 may be the same, or may be different. In addition, in actual application, a quantity of small hollow spheres may be designed based on a requirement. Specific shapes, sizes, and a quantity of the small hollow spheres 132 are not limited in embodiments of this application, and may be properly designed based on actual application.

Different from a solution for manufacturing porous and microstructured structures by using dissolved sugar/salt, etching, or the like, in this solution, the small spheres may be added to a formula in advance, and dielectric is manufactured through a plating manner, which is convenient for use on various special-shaped surfaces such as a curved surface. In addition, a manufacturing process is simple and can be used for mass production.

The conductive filler 133 may use various conductive substances. For example, carbon black may be used as the conductive filler. It should be understood that the carbon black is merely an example, and other conductive substances are also possible. A material of the conductive filler 133 is not limited embodiments of this application.

A purpose of adding the conductive filler in the first dielectric layer 13 is to add another gravity-induced capacitance change mechanism, to further improve a measurable range and sensitivity of the pressure sensor. A formula for calculating a dielectric constant of a composite material is as follows:

$$\varepsilon\_composite=\varepsilon\_substrate\,(f\_c–f)^{–s}$$

ε_composite represents a dielectric constant of a composite dielectric; ε_substrate represents a dielectric constant of a dielectric substrate; f_c represents a seepage threshold of the conductive filler; f represents a volume fraction of the conductive filler; and s represents a constant. Under the action of pressure, volume compression of the flexible polymer 131 causes volume compression of the first dielectric layer 13, which further causes the volume fraction of the conductive filler to increase. When the volume fraction of the conductive filler does not reach the seepage threshold, the dielectric constant of the composite dielectric increases as the pressure increases, and the capacitance of the first dielectric layer 13 also increases as the pressure increases, thereby improving an available measurement range and sensitivity of the pressure sensor.

The second dielectric layer 12 is disposed between the electrode layer and the first dielectric layer 13, and is in contact with the first dielectric layer 13. In a possible implementation, the second dielectric layer 12 may be disposed only between the electrode layer 11 and the first dielectric layer 13, or may be disposed only between the electrode layer 14 and the first dielectric layer 13. In another possible implementation, the second dielectric layer 12 may be disposed both between the electrode layer 11 and the first dielectric layer 13 and between the electrode layer 14 and the first dielectric layer 13.

The second dielectric layer 12 is made of an insulation material, and mainly plays a role of reducing electricity leakage and reducing noise. It should be understood that the second dielectric layer 12 plays only a role of blocking flow of charges, and it is also possible to use some second dielectric layers 12 that cannot completely block flow of charges, that cannot block passage of all charges, or that cannot be completely insulated.

Due to existence of the conductive filler 133, an electricity leakage phenomenon may exist in the pressure sensor structure. The second dielectric layer 12 is disposed between the electrode layer and the dielectric layer, to reduce the electricity leakage phenomenon. Excessive electricity leakage reduces sensitivity of the capacitive pressure sensor and increases noise. Therefore, disposing of the second dielectric layer 12 can improve sensitivity of the capacitive sensor and reduce noise, thereby obtaining better pressure measurement effect.

It should be noted that adding the second dielectric layer 12 is equivalent to adding a series capacitor to an original capacitor. According to a formula $C\_total=C\_1(1/((C\_1/C\_2))+1)$ for calculating capacitance of the series capacitor, to reduce impact of the series capacitor (the second dielectric layer 12) on total capacitance, capacitance of the series capacitor (the second dielectric layer 12) needs to be large enough. In this case, the capacitance of the second dielectric layer 12 may be increased by reducing a thickness of the second dielectric layer 12. Therefore, the thickness of the second dielectric layer 12 may be set to be less than 200 nm, to reduce impact of the second dielectric layer 12 on performance of the pressure sensor.

The specific thickness of the second dielectric layer 12 may be calculated based on an actual situation. For example, for a flexible capacitive pressure sensor whose length*width is 9 mm*4 mm, if it is assumed that the capacitance C1 of the first dielectric layer 13 is approximately 2*10-7F, and a second dielectric layer whose material is $Al_2O_3$ is used, to achieve a design objective of the capacitance C2≥100C1 of the second dielectric layer 12, the thickness of the second dielectric layer 12 should be less than or equal to 15 nm.

In a possible implementation, the small hollow spheres 132 protrude on a surface that is of the first dielectric layer 13 and that faces at least one of the electrode layers. That is, the small hollow spheres 132 are not all immersed in the flexible polymer 131, but protrude on the surface that is of the first dielectric layer 13 and that faces at least one of the electrode layers. As a result, the surface of the first dielectric layer 13 is not flat but uneven, and a microstructure is formed on the surface of the first dielectric layer 13. For example, the small hollow spheres 132 may protrude only on a surface that is of the first dielectric layer 13 and that faces the first electrode layer 11, or may protrude only on a surface that is of the first dielectric layer 13 and that faces the second electrode layer 14, or may protrude on both surfaces that are of the first dielectric layer 13 and that separately face the first electrode layer 11 and the second electrode layer 14.

As shown in FIG. 3, because the small hollow spheres 132 protrude on the surface that is of the first dielectric layer 13 and that faces the electrode layer, more air (air outside the small hollow spheres 132) exists in the first dielectric layer 13. In addition, under the action of pressure, the protrusive small hollow spheres are more likely to deform than small hollow spheres immersed in the flexible polymer. Under the action of pressure, in one aspect, the thickness of the first dielectric layer 13 decreases, and the capacitance increases. In another aspect, the protrusive small spheres 132 are flattened, and air between the protrusive small spheres is partially discharged outside the first dielectric layer 13. The aspects both cause a proportion of air in the first dielectric layer 13 to decrease. Because a dielectric constant of the air is less than that of the flexible polymer 131, an overall dielectric constant of the first dielectric layer 13 increases. According to the formula for calculating capacitance, when the dielectric constant becomes larger, the capacitance further increases. The gravity-induced capacitance change mechanism is added on the basis of the conventional capacitive pressure sensor, which can further improve a measurement range and sensitivity of the capacitive sensor. In addition, because the small hollow spheres have the elastic outer walls, the protrusive small spheres are not easily damaged or cracked in a process of elastic deformation caused by pressure, and have better security and stability, which helps improve sensitivity and measurement precision of the pressure sensor.

The electrode layer may include a conductive material, so that the electrode layer has a conductive property. At least one of the two electrode layers may be designed as a flexible electrode. For example, the first electrode layer 11 may be designed as the flexible electrode, to enhance adaptability of the pressure sensor to different curved surfaces, and better deform under the action of pressure. It should be understood that in actual application, only the first electrode layer 11 may be disposed as the flexible electrode, or only the second electrode layer 14 may be disposed as the flexible electrode, or both the first electrode layer 11 and the second electrode layer 14 may be disposed as flexible electrodes.

In a possible implementation, some conductive materials may be mixed in a flexible electrode layer. For example, the flexible electrode layer may be made of a flexible conductive fabric. In this case, a Young's modulus of the flexible electrode layer may be less than 50 MPa, and a flexible electrode with a small Young's modulus is used, so that the flexible electrode layer can be softer and better deform with pressure. In this way, under an action of same pressure, an output of the pressure sensor keeps stable, and time drift effect is reduced.

In another possible implementation, the flexible electrode layer may include a flexible polymer layer and a conductive plating layer. The conductive plating layer is attached to a surface of the flexible polymer layer, to jointly form the flexible electrode. The flexible electrode layer is disposed with the flexible polymer layer cooperating with the conductive plating layer, so that the electrode layer is softer, and adaptation of the pressure sensor to different curved surfaces is enhanced.

In a possible implementation, the flexible polymer layer 111 may be disposed as a layer of thin film, and the flexible polymer layer 111 may be of a dense structure or of a porous structure.

The conductive plating layer may be of a metallic material such as gold (Au), copper (Cu), platinum (Pt), or aluminum (Al), and may be a composite of one or more of the metallic materials, or may be one layer or a plurality of layers.

In a possible implementation, a Young's modulus of the flexible polymer layer 111 is less than 50 MPa, and a thickness of the conductive plating layer 112 is less than 2 μm. The flexible electrode 11 can be softer and better deform with pressure by using the flexible polymer layer with a smaller Young's modulus and the conductive plating layer with a smaller thickness. In this way, under an action of same pressure, an output of the pressure sensor keeps stable, and time drift effect is reduced.

In a possible implementation, one of the two electrode layers is a flexible electrode (for example, the first electrode layer 11 is a flexible electrode), and the other electrode layer is a rigid electrode. Alternatively, the two electrode layers both are flexible electrodes, but a Young's modulus of the first electrode layer 11 is less than a Young's modulus of the second electrode layer 14. In this case, some small hollow spheres of the small hollow spheres protrude on a surface that is of the first dielectric layer 13 and that faces the first electrode layer 11.

The small hollow spheres protrude on the surface that is of the first dielectric layer 13 and that faces the first electrode layer 11 with a smaller Young's modulus. In this way, the protrusive small hollow spheres can more quickly deform, and the air between the protrusive small spheres can be more quickly discharged, thereby further improving sensitivity of the pressure sensor.

In a possible implementation, when at least one of the two electrode layers is made of some special metallic materials, a dense oxide layer is naturally formed on a surface of the electrode layer. In this case, the oxide layer may be directly used as the second dielectric layer 12, and a second dielectric layer does not need to be additionally disposed. In this case, the second dielectric layer is attached to a surface that is of at least one electrode layer and that faces the first dielectric layer. For example, the special metallic material may be aluminum (Al), titanium (Ti), molybdenum (Mo), magnesium (Mg), stainless steel, or the like. However, if the electrode layer is made of another metallic material or another material on whose surface the dense oxide layer is not naturally formed, a second dielectric layer with a small thickness, for example, $Al_2O_3$, needs to be disposed. It should be understood that $Al_2O_3$ is merely an example, and another insulation material is also possible.

When an electrode layer is made of some special metal, a very thin layer of oxide is naturally formed on a surface of the special metal. The oxide layer may play a role of insulation, that is, the second dielectric layer is naturally formed between the electrode layer and the first dielectric layer. In this case, the second electrode layer does not need to be additionally disposed, and a process is simplified. In addition, a thickness of the naturally formed oxide is very thin (usually less than 10 nm) and presents the dense structure. Therefore, impact on performance of the pressure sensor is small, and a volume of the pressure sensor can be further reduced.

It should be understood that the electrode layer that is made of a special metallic material may be a first electrode layer or may be a second electrode layer, may be a flexible electrode or may be a rigid electrode, or may be an electrode with a large Young's modulus, or may be an electrode with a small Young's modulus.

In addition to the foregoing structure, the pressure sensor further includes electrode pins that are electrically connected to the electrode layers, and the electrode pins are configured to transfer a current, to implement pressure measurement.

An embodiment of this application further provides a specific implementation based on a structural design of the foregoing pressure sensor, and performance of the pressure sensor in the specific implementation is tested.

In this specific implementation, an upper surface electrode (the electrode layer 11) of the capacitive pressure sensor uses a flexible polymer thin film 111 and the conductive plating layer 112, and a lower surface electrode (the electrode layer 14) uses conductive silver paste. The flexible polymer thin film 111 is a thermoplastic polyurethane (TPU, Thermoplastic Polyurethane) electrospinning membrane or a TPU thin film. The conductive plating layer 112 includes a gold plating layer and an aluminum plating layer. A thickness of the gold plating layer is about 50 nm (the gold plating layer is used to increase stability of the aluminum plating layer, and a bonding force of aluminum plating on the TPU alone is poor), and a thickness of the aluminum plating layer is about 150 nm. The second dielectric layer 12 uses a natural dense oxide layer (a thickness<10 nm) on a surface of the aluminum plating layer. Specifically, an electrospinning membrane of a BASF TPU1180A model is used, which is electrospun into a fiber membrane, and then a gold conductive layer and an aluminum conductive layer are successively deposited through magnetron sputtering, to form a flexible electrode. The gold conductive layer is used to improve stability of the aluminum metal conductive layer on a TPU substrate.

The flexible polymer 131 in the first dielectric layer 13 is made of a silica gel material, and an addition amount of silica gel is 100. The small hollow spheres 132 are expanded microspheres with a diameter of 100 microns, and an addition amount is 3. The conductive filler is carbon black, and an addition amount is 29. The three groups of materials are fully polished and mixed, poured into a mold and cured to obtain the first dielectric layer 13. A thickness of the first dielectric layer 13 is about 200 μm.

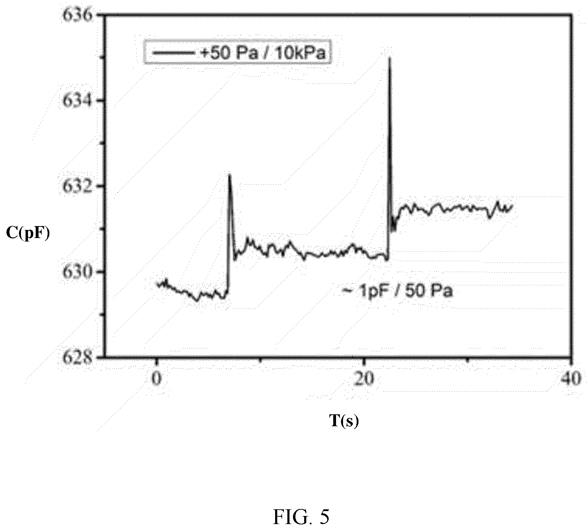

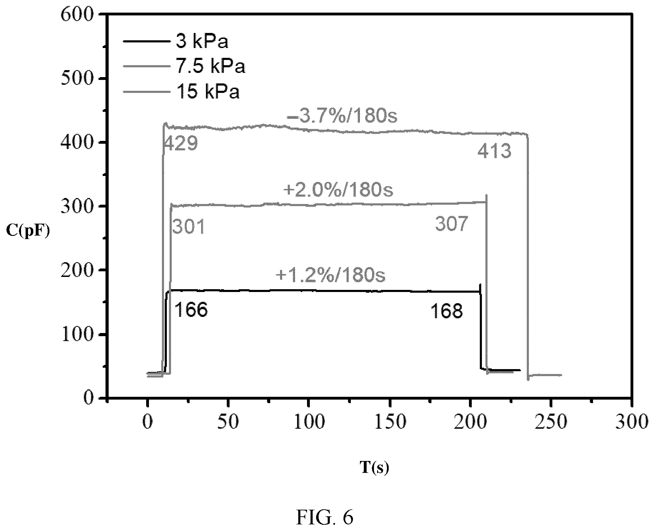

According to the test, as shown in FIG. 4, the pressure sensor has linearity of 0.979 in a pressure range of 0 kPa to 30 kPa, and can distinguish a force of 50 Pa. As shown in FIG. 5, when the force of 50 Pa is added to the pressure sensor at a pressure of 10 kPa, a signal change is about 1 pF. As shown in FIG. 6, under actions of pressure of 3 kPa, 7.5 kPa, and 15 kPa, capacitance of the pressure sensor changes by +1.2, +2.0, and -3.7% respectively in 3 minutes compared with initial values, and time drift is less than 5%.

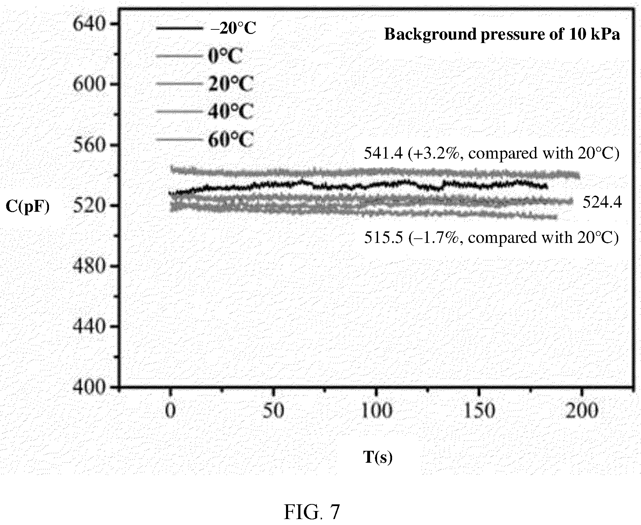

In addition, in an experiment, a high and low temperature test box is used to simulate a high-temperature and low-temperature environment, and capacitance signal values under different temperatures are recorded under a typical pressure value of 10 kPa. As shown in FIG. 7, test temperature points are -20°C, 0°C, 20°C, 40°C, and 60°C, respectively. Continuous signal data of no less than 180 seconds is recorded at each point, and average capacitance signal values under different temperature conditions are obtained through calculation. Compared with a single change of the pressure sensor under 20°C, signal changes of the pressure sensor under -20°C, 0°C, 40°C, and 60°C are all less than 5%, which shows excellent temperature stability.

The pressure sensor, with a plurality of gravity-induced capacitance change mechanisms, provided in this embodiment of this application expands a measurement range of the pressure sensor, and improves sensitivity of the pressure sensor. Therefore, the pressure sensor can implement a more accurate measurement result. In addition, the pressure sensor is flexible, can be bent, and can be widely applied to various special-shaped surfaces such as a curved surface. In addition, the pressure sensor provided in this embodiment of this application has a simple manufacturing process, facilitates batch production, and is easier to implement productization.

An embodiment of this application further provides an electronic device. The electronic device includes a device body and the pressure sensor provided in embodiments of this application. In a possible implementation, the electronic device may be various electronic devices, for example, a mobile phone, a watch, a notebook computer, and a remote control, that need to perform human-machine interaction in combination with pressure measurement. In another possible implementation, the electronic device may also be a wearable device such as a headset, a watch, a band, glasses, or a ring. In combination with an automatic scaling/deformation technology, the electronic device automatically adjusts tightness/shape, thereby improving wearing comfort of a user.

It should be understood that the foregoing examples of the electronic device are merely examples. Any electronic device that needs to be combined with a pressure measurement function is possible. A specific product form of the electronic device is not limited in embodiments of this application.

The foregoing descriptions are merely optional embodiments of the present disclosure, but are not intended to limit the present disclosure. Any modification, equivalent replacement, improvement, or the like made within the principle of the present disclosure should fall within the protection scope of the present disclosure.

**Claims**

1. A pressure sensor, wherein the pressure sensor comprises two electrode layers, a first dielectric layer, and a second dielectric layer;

   the two electrode layers are respectively disposed on two sides of the first dielectric layer, and are configured to input a current and output a current;
   the first dielectric layer comprises a flexible polymer, a plurality of small hollow spheres, and a conductive filler, the plurality of small hollow spheres have flexible outer walls, the plurality of small hollow spheres and the conductive filler are wrapped in the flexible polymer, and some of the plurality of small hollow spheres protrude on a surface that is of the first dielectric layer and that faces at least one of the electrode layers; and
   the second dielectric layer is of an insulation material, and the second dielectric layer is disposed between at least one of the electrode layers and the first dielectric layer.

2. The pressure sensor according to claim 1, wherein a thickness of the second dielectric layer is less than 200 nm.

3. The pressure sensor according to claim 1 or 2, wherein the two electrode layers comprise a first electrode layer, and a Young's modulus of the first electrode layer is less than 50 MPa.

4. The pressure sensor according to claim 1 or 2, wherein the two electrode layers comprise a first electrode layer, the first electrode layer comprises a flexible polymer layer and a conductive plating layer, the conductive plating layer is attached to a surface that is of the flexible polymer layer and that faces the first dielectric layer, a Young's modulus of the flexible polymer is less than 50 MPa, and a thickness of the conductive plating layer is less than $2\ \mu m$.

5. The pressure sensor according to claim 4, wherein the flexible polymer layer is of a dense structure or of a porous structure.

6. The pressure sensor according to any one of claims 3 to 5, wherein the some small hollow spheres protrude on a surface that is of the first dielectric layer and that faces the first electrode layer.

7. The pressure sensor according to any one of claims 1 to 6, wherein

   the two electrode layers comprise a second electrode layer, and the second electrode layer comprises a metallic material; and
   the second dielectric layer is attached to a surface that is of the second electrode layer and that faces the first dielectric layer, and the second dielectric layer is an oxide of the metallic material.

8. The pressure sensor according to any one of claims 1 to 7, wherein the first dielectric layer is in contact with the second dielectric layer.

9. The pressure sensor according to any one of claims 1 to 8, wherein the second dielectric layer is disposed between the first dielectric layer and each of the two electrode layers.

10. The pressure sensor according to any one of claims 1 to 9, wherein the pressure sensor further comprises electrode pins electrically connected to the two electrode layers.

11. An electronic device is provided, wherein the electronic device comprises a device body and the pressure sensor according to any one of claims 1 to 9.

1

11

12

13

14

FIG. 1

13

131

132

133

FIG. 2

13

FIG. 3

Test of linearity in a pressure range of 0 kPa to 30 kPa

$y=17.675x+48.62$

$R^2=0.9793$

C(pF)

P(kPa)

FIG. 4

FIG. 5

FIG. 6

FIG. 7

## INTERNATIONAL SEARCH REPORT

| International application No. |
| --- |
| **PCT/CN2024/070820** |

| A. | CLASSIFICATION OF SUBJECT MATTER |
| --- | --- |
| | G01L1/14(2006.01)i; G01L9/12(2006.01)i |

According to International Patent Classification (IPC) or to both national classification and IPC

| B. | FIELDS SEARCHED |
| --- | --- |

Minimum documentation searched (classification system followed by classification symbols)

G01L

Documentation searched other than minimum documentation to the extent that such documents are included in the fields searched

Electronic data base consulted during the international search (name of data base and, where practicable, search terms used)

VEN, CNKI, CNTXT, ENTXTC: 介质, 微球, 膨胀, 电极, 介电, 电容, 压力传感器, 聚合物, dielectric, electrode, mocrophere, ball, carbon, black, polymer, layer, capacit+

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 219870063 U (HUAWEI TECHNOLOGIES CO., LTD. et al.) 20 October 2023 (2023-10-20)<br>claims 1-11 | 1-11 |
| Y | CN 114034416 A (CHINA ELECTRONIC PRODUCT RELIABILITY AND ENVIRONMENTAL TESTING RESEARCH INSTITUTE ((FIFTH ELECTRONIC RESEARCH INSTITUTE OF MIIT) (CHINA CEPREI LABORATORY))) 11 February 2022 (2022-02-11)<br>description, paragraphs [0034]-[0061], and figures 1-3 | 1-11 |
| Y | 夏乔琦等 (XIA, Qiaoqi et al.). "硅橡胶泡沫复核材料的制备、性能与应用 (Preparation, Properties and Application of Silicone Rubber Foam Composites)"<br>中国材料进展 (Materials China), Vol. 37, No. 3, 31 March 2018 (2018-03-31), 169-176<br>sections 2.2.4 and 3.4 | 1-11 |
| Y | CN 110303734 A (SHENZHEN INSTITUTE OF ADVANCED TECHNOLOGY) 08 October 2019 (2019-10-08)<br>description, paragraph [0051], and figures 1-2 | 1-11 |

☑ Further documents are listed in the continuation of Box C.     ☑ See patent family annex.

| * | Special categories of cited documents: | | |
| --- | --- | --- | --- |
| "A" | document defining the general state of the art which is not considered to be of particular relevance | "T" | later document published after the international filing date or priority date and not in conflict with the application but cited to understand the principle or theory underlying the invention |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **10 April 2024** | **12 April 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2024/070820** |

### C. DOCUMENTS CONSIDERED TO BE RELEVANT

| Category* | Citation of document, with indication, where appropriate, of the relevant passages | Relevant to claim No. |
| --- | --- | --- |
| A | CN 106908176 A (SUZHOU INSTITUTE OF NANO-TECH AND NANO-BIONICS, CHINESE ACADEMY OF SCIENCES) 30 June 2017 (2017-06-30) <br> entire document | 1-11 |
| A | CN 107748024 A (SHENZHEN UNIVERSITY) 02 March 2018 (2018-03-02) <br> entire document | 1-11 |
| A | CN 110763256 A (GUANGDONG SYGOLE INTELLIGENT TECHNOLOGY CO., LTD.) 07 February 2020 (2020-02-07) <br> entire document | 1-11 |
| A | CN 111551290 A (XI'AN UNIVERSITY OF TECHNOLOGY) 18 August 2020 (2020-08-18) <br> entire document | 1-11 |
| A | CN 112484887 A (NANJING TECH UNIVERSITY) 12 March 2021 (2021-03-12) <br> entire document | 1-11 |
| A | CN 113218543 A (SUZHOU INSTITUTE OF NANO-TECH AND NANO-BIONICS, CHINESE ACADEMY OF SCIENCES) 06 August 2021 (2021-08-06) <br> entire document | 1-11 |
| A | CN 114674467 A (FUZHOU UNIVERSITY) 28 June 2022 (2022-06-28) <br> entire document | 1-11 |
| A | CN 115165165 A (SHENZHEN SHENNAN ELECTRICAL GAS TURBINE ENGINEERING TECHNOLOGY CO., LTD.) 11 October 2022 (2022-10-11) <br> entire document | 1-11 |
| A | CN 213814598 U (NANCHANG O-FILM DISPLAY TECHNOLOGY CO., LTD.) 27 July 2021 (2021-07-27) <br> entire document | 1-11 |
| A | KR 102094998 B1 (KOREA ADVANCED INSTITUTE OF SCIENCE AND TECHNOLOGY) 30 March 2020 (2020-03-30) <br> entire document | 1-11 |

Form PCT/ISA/210 (second sheet) (July 2022)

## INTERNATIONAL SEARCH REPORT
**Information on patent family members**

International application No.

**PCT/CN2024/070820**

| Patent document cited in search report | | | Publication date (day/month/year) | Patent family member(s) | Publication date (day/month/year) |
|---|---|---|---|---|---|
| CN | 219870063 | U | 20 October 2023 | None | |
| CN | 114034416 | A | 11 February 2022 | None | |
| CN | 110303734 | A | 08 October 2019 | None | |
| CN | 106908176 | A | 30 June 2017 | None | |
| CN | 107748024 | A | 02 March 2018 | None | |
| CN | 110763256 | A | 07 February 2020 | None | |
| CN | 111551290 | A | 18 August 2020 | None | |
| CN | 112484887 | A | 12 March 2021 | None | |
| CN | 113218543 | A | 06 August 2021 | None | |
| CN | 114674467 | A | 28 June 2022 | None | |
| CN | 115165165 | A | 11 October 2022 | None | |
| CN | 213814598 | U | 27 July 2021 | None | |
| KR | 102094998 | B1 | 30 March 2020 | None | |

Form PCT/ISA/210 (patent family annex) (July 2022)

**EP 4 636 372 A1**

**REFERENCES CITED IN THE DESCRIPTION**

**Patent documents cited in the description**

- CN 202310013743